# EUROPÄISCHE PATENTANMELDUNG

(11) **EP 1 231 113 A2**
(43) Veröffentlichungstag der Anmeldung: **14.08.2002**
(21) Anmeldenummer: 02002483.2
(22) Anmeldetag: 01.02.2002
(51) Int. Cl.: B60R 11/02, H04M 1/60

(54) **Freisprecheinrichtung**

(30) Priorität: 07.02.2001 DE 10105513
(71) Anmelder: paragon AG, 33129 Delbrück/Paderborn (DE)
(72) Erfinder: Rodemer, Klaus, 36369 Lautertal 5 (DE); Ohlenburger, Jörg, 35619 Braunfels/Philippstein (DE)
(74) Vertreter: Schütz, Peter, Dipl.-Ing.

(57) **Zusammenfassung**

Eine Freisprecheinrichtung für ein Kraftfahrzeug ist als Einheit aus Lautsprecher und Mikrofon ausgebildet, bei welcher der mit einem Haken an der Oberkante der B-Säulenverkleidung einhängbare Lautsprecher über einen Arm mit dem Mikrofon verbunden ist. Ein am Arm befestigter Führungsbügel umfasst den Sicherheitsgurt, so daß das Mikrofon beim Anlegen des Gurtes im Hals/Brust-Bereich des Fahrers, und damit ohne zu stören nahe beim Mund des Fahrers liegt. Der in der Nähe der B-Säule befindliche Lautsprecher liegt gleichermaßen nahe beim Ohr, so daß beste Voraussetzungen für die Sprachverständlichkeit beim Sprechen und Hören gegeben sind. Bei abgelegtem Gurt hängt die Einheit dagegen ohne irgendwie zu stören im Bereich zwischen B-Säule und Sitzlehne.

## Beschreibung

Die Erfindung betrifft eine Freisprecheinrichtung für Kraftfahrzeuge mit einem Lautsprecher und einem am Anschnallgurt gehaltenen Mikrofon.

In der deutschen Patentanmeldung 100 54 118.6 ist eine derartige Freisprecheinrichtung beschrieben, bei welcher der - in einem Gehäuse untergebrachte - Lautsprecher am oberen Umlenkpunkt des Anschnallgurtes befestigt wird und das Mikrofon in einem auf dem Gurt verschiebbaren Gehäuse untergebracht ist. Die elektrische Verbindung zwischen dem Mikrofon und einer in dem Lautsprechergehäuse untergebrachten Elektronikschaltung erfolgt über eine Infrarotstrecke, und eine im Mikrofongehäuse untergebrachte Batterie wird über Kontakte aufgeladen, die beim Heranschieben des Mikrofongehäuses an das Lautsprechergehäuse eine Verbindung mit entsprechenden Gegenkontakten herstellen.

Der Erfindung liegt die Aufgabe zugrunde, eine Freisprecheinrichtung zu schaffen, bei welcher Mikrofon und Lautsprecher in einer Einheit zusammengefaßt sind, die sich auch nachträglich problemlos im Kraftfahrzeug installieren läßt und beim Gurtanlegen Lautsprecher und Mikrofon automatisch in eine optimale Position zu Ohr und Mund des Fahrers bringt, ohne irgendwie hinderlich zu sein oder zu irritieren, und die sich ohne Ablenkung des Fahrers in einfachster Weise bedienen läßt.

Diese Aufgabe wird durch die im Anspruch 1 angeführten Merkmale gelöst. Weiterbildungen und spezielle Ausgestaltungen der Erfindung sind in den Unteransprüchen gekennzeichnet.

Durch die Verbindung des Mikrofons mit dem Lautsprecher bzw. dessen Gehäuse über einen als flexible Schaltungsplatine ausgebildeten Arm sind Mikrofon und Lautsprecher zu einer Einheit zusammengefaßt, die sich als Ganzes lediglich durch Einhängen in die Oberkante der B-Säulenverkleidung des Kraftfahrzeugs mit Hilfe eines geeigneten Hakens ohne jeden Aufwand höchst einfach montieren läßt und über Kabelverbindungen zur Stromversorgung aus dem Bordnetz an die Steckdose des Zigarettenanzünders bzw. zur Signalübertragung über ein Kabel an die Steckerleiste des Handy's angeschlossen wird. Die flexible Schaltungsplatine läßt sich ohne weiteres so auslegen, daß sie sich an ihrem oberen Ende verbreitert und Platz zur Unterbringung der erforderlichen Elektronikschaltung (Verstärkung etc.) bietet, an welche das am entgegengesetzten Ende des als Verbindungsarm fungierenden schmalen Leiterabschnittes befestigte Mikrofon über Leitungsbahnen angeschlossen ist. Zweckmäßigerweise wird auf den Verbindungsarm ein Schrumpfschlauch aufgeschoben, dessen eines Ende in das Lautsprechergehäuse und dessen anderes Ende in das an die Platine angeklipste Mikrofongehäuse ragt und der die Leiterbahnen schützt und für eine akzeptable Optik sorgt.

Zur Führung des Mikrofons am Haltegurt dient zweckmäßigerweise ein vorzugsweise im mittleren Bereich des Verbindungsarms angebrachter länglicher, quer zum Arm verlaufender Bügel, durch welchen der Gurt hindurchläuft. Zum leichten Einfädeln des Gurtes ist es zweckmäßig, den Bügel auf der Rückseite mit einem Spalt oder Schlitz zu versehen, durch welchen der Gurt seitlich eingeführt werden kann und dann zwischen den beiden gekrümmten Enden des Bügels gehalten wird. Es ist ferner zweckmäßig, den am Lautsprechergehäuse angebrachten Haken in Längsrichtung einstellbar zu machen, beispielsweise mittels eines Einstellschlitzes und einer geeigneten Rastvorrichtung, so daß die Einheit je nach Größe des Fahrers höher oder niedriger positioniert werden kann, um auf diese Weise sowohl Lautsprecher wie auch Mikrofon möglichst nah an Ohr bzw. Mund der angeschnallten Person zu bringen. Beim Ablegen des Gurtes kann dieser beim Aufrollen problemlos durch den Führungsbügel gleiten, und die gesamte Einheit hängt dann neben der B-Säule, ohne in irgendeiner Weise hinderlich zu sein. Beim Anlegen des Gurtes gelangt die Einheit ohne Notwendigkeit weiterer Handgriffe automatisch in die richtige Benutzungsposition.

Zweckmäßigerweise wird am Mikrofon eine Bedienungstaste vorgesehen, die der Benutzer bei einem Handy-Anruf nur zu drücken braucht, um die Freisprecheinrichtung einzuschalten und das Gespräch anzunehmen. Auch dies erfordert keinerlei Suchen nach einer Handy-Taste, wodurch der Fahrer abgelenkt würde, sondern die Taste an dem unmittelbar auf seiner Brust liegenden Mikrofon findet er ohne jegliches Suchen "blind".

Die Erfindung sei nun anhand eines in den beiliegenden Zeichnungen veranschaulichten Ausführungsbeispiels näher erläutert. Es zeigen:
- Fig. 1: eine schematische Darstellung der erfindungsgemäßen Freisprecheinrichtung; und
- Fig. 2: eine verkleinerte Darstellung zur Veranschaulichung der Schaltungsplatine.

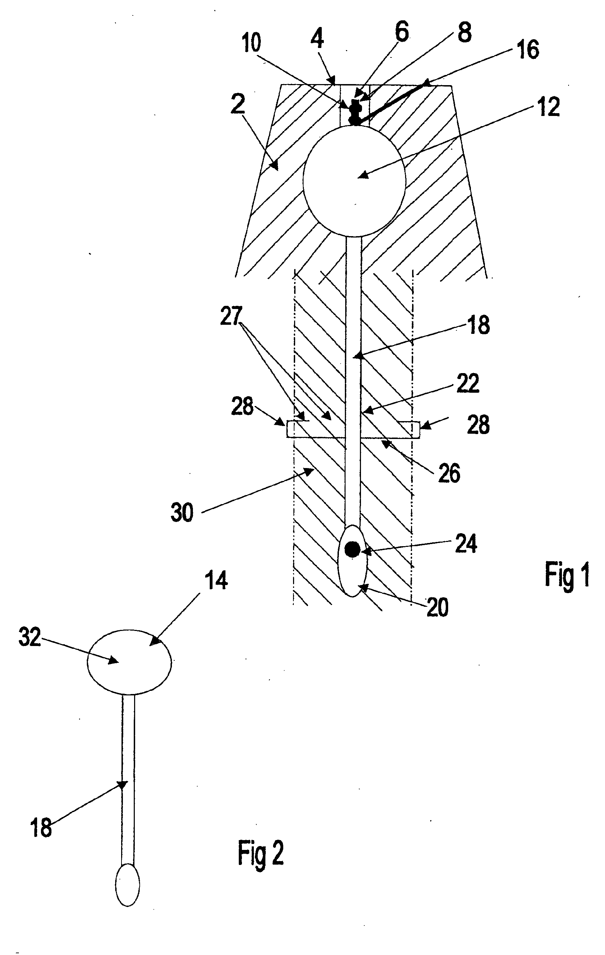

In Fig. 1 erkennt man die angedeutete Verkleidung 2 der B-Säule des Kraftfahrzeugs, die an ihrem oberen Ende mit einer quer verlaufenden Oberkante 4 endet. In diese Oberkante läßt sich ohne weiteres ein Haken 6 einhängen, der etwa aus umgebogenem Flachmaterial hergestellt werden kann. Der Haken 6 läßt sich mit Hilfe eines Einstellschlitzes 8 und Rasten 10 gegenüber dem Lautsprechergehäuse 12 oder je nach Konstruktion auch gegenüber der Platine 14, an welcher das Lautsprechergehäuse 12 mit dem nicht gezeigten Lautsprecher sitzt, in Längsrichtung verschieben, um die Einheit jeweils optimal zur Kopfhöhe des jeweiligen Fahrers einstellen zu können.

Der verbreiterte obere Teil 32 der Platine ist mit elektronischen Bauelementen für die zum Betrieb der Einrichtung erforderliche Schaltung bestückt, die über eine angedeutete Kabelverbindung 16 mit der Stromversorgung und dem Handy verbunden wird.

Die Platine 14 läuft nach unten in einen schmalen Arm 18 aus, der die hier nicht veranschaulichten Leiterbahnen zur Verbindung mit dem Mikrofon 20 trägt und durch einen aufgezogenen Schrumpfschlauch 22 geschützt ist, der oben und unten in das Lautsprecher- bzw. Mikrofongehäuse hineinreicht. Das Mikrofon ist mit einer Taste 24 ausgestattet, die bei einem Handy-Anruf zur Gesprächsannahme gedrückt wird, ohne daß weitere Handgriffe nötig wären, die den Fahrer ablenken könnten. Im mittleren Bereich des Arms 18 ist ein Führungsbügel 26 angebracht, der mit zwei seitlichen Endbögen 28 den hier nur als Phantom angedeuteten Gurt 30 umgreift, so daß dieser beim Auf- und Abrollen frei durch den Bügel 26 hindurchlaufen kann. Der Führungsbügel 26 kann beispielsweise aus Rundmaterial wie eine Schlaufe oder Öse gebogen werden, oder aber auch aus Flachmaterial hergestellt werden, so daß hinten ein Spalt 27 zum Einführen des Gurtes 30 frei bleibt. Die Gehäuse für Lautsprecher und Mikrofon können im Interesse einer einfachen Montage zweiteilig mit einer Klipsbefestigung ausgebildet werden.

In Fig. 2 ist die Platine 14 in verkleinertem Maßstab mit ihrem verbreiterten Oberteil 32 und dem schmalen Arm 18 separat dargestellt. Sie wird vorzugsweise aus 0,5 mm dickem PCB-Material einteilig hergestellt und ist damit einfach, sicher und preiswert zu produzieren. In dieser geringen Stärke ist das Material sehr flexibel, so daß die für die Handhabung der Einheit gewünschte Unempfindlichkeit gegen Brüche oder sonstige Beschädigungen sichergestellt ist.

Aus Fig. 1 geht unmittelbar hervor, daß die erfindungsgemäße Einheit bei Nichtgebrauch am Gurt neben der B-Säule - im Raum zwischen dieser und der Sitzlehne - hängt und dort in keiner Weise hinderlich ist. Beim Anlegen des Gurtes kommt der Lautsprecher in Ohrnähe und das Mikrofon liegt mit dem Gurt auf der Brust in unmittelbarer Nähe des Mundes und nimmt damit die Sprache mit geringstmöglichen Nebengeräuschen auf, so daß eine gute Sprachverständlichkeit auch ohne aufwendige elektronische Filterung erhalten wird. In spezieller Ausgestaltung der Erfindung kann eine Regelschaltung für die Wiedergabelautstärke des Lautsprechers 12 vorgesehen sein, die bei lautem Innenraumgeräusch die Verstärkung der Wiedergabesignale und damit die vom Lautsprecher abgegebene Schallleistung somit erhöht, daß die Verständlichkeit gesichert bleibt. Bei geringem Geräuschpegel im Auto wird die Verstärkung entsprechend heruntergeregelt. Zu diesem Zweck kann das Innenraumgeräusch mit einem zusätzlichen, an geeigneter Stelle plazierten Mikrofon erfaßt werden, dessen Signale in einer Verarbeitungsschaltung zur Erzeugung ensprechender Regelsignale für den Wiedergabeverstärker benutzt werden.

## Patentansprüche

1. Freisprecheinrichtung für Kraftfahrzeuge mit einem Lautsprecher und einem am Anschnallgurt gehaltenen Mikrofon, **dadurch gekennzeichnet, daß** der Lautsprecher (12) mit einem Haken (6) zum Einhängen an der B-Säulenverkleidung (2) des Kraftfahrzeugs versehen ist und einen nach unten ragenden Arm (18) aufweist, der an seinem anderen Ende das Mikrofon (20) trägt und in seinem mittleren Bereich mit einem Führungsbügel (26) zur Halterung am Gurt (30) versehen ist.

2. Freisprecheinrichtung nach Anspruch 1, **dadurch gekennzeichnet, daß** der Arm (18) als flexible Schaltungsplatine (14) ausgebildet ist, deren verbreiteter oberer Teil (32) mit den Bauelementen einer Elektronikschaltung bestückt und mit dem Lautsprecher (12) verbunden ist und an deren unterem Ende das Mikrofon (20) befestigt und durch über den schmalen Hauptteil (Arm 18) verlaufende Leiterbahnen mit der Elektronikschaltung verbunden ist.

3. Freisprecheinrichtung nach Anspruch 2, **dadurch gekennzeichnet, daß** der schmale Hauptteil (Arm 18) der Platine (14) von einem Schrumpfschlauch (22) umgeben ist.

4. Freisprecheinrichtung nach Anspruch 1, **dadurch gekennzeichnet, daß** der Haken (6) gegenüber dem Lautsprecher (12) in Längsrichtung einstellbar ist.

5. Freisprecheinrichtung nach Anspruch 4, **gekennzeichnet durch** einen Einstellschlitz (8) und eine Rastvorrichtung (Rasten 10) zur Fixierung der Längseinstellnung.

6. Freisprecheinrichtung nach Anspruch 1, **dadurch gekennzeichnet, daß** an dem Mikrofon (20) eine Bedienungstaste (24) vorgesehen ist.

7. Freisprecheinrichtung nach Anspruch 1, **dadurch gekennzeichnet, daß** der Führungsbügel (26) als der Gurtbreite entsprechend längliche Öse mit einem Spalt (27) zum Einführen des Gurtes (30) ausgebildet ist.

8. Freisprecheinrichtung nach Anspruch 2, **dadurch gekennzeichnet, daß** die Elektronikschaltung ein Lautstärkeregelmodul enthält, das die Wiedergabelautstärke in Abhängigkeit vom Innenraumgeräusch des Kraftfahrzeugs regelt.
